# EUROPEAN PATENT APPLICATION

(11) **EP 4 075 073 A1**
(43) Date of publication of application: **19.10.2022**
(21) Application number: 21168476.6
(22) Date of filing: 15.04.2021
(51) Int. Cl.: F24H 4/00, F24H 9/20, G05D 23/19

(54) **METHOD FOR CONTROLLING A FLUID OUTLET TEMPERATURE OF A HEAT EXCHANGER**

(71) Applicant: BDR Thermea Group B.V., 7332 BD Apeldoorn (NL)
(72) Inventor: Amerongen, Mike, 7332 Apeldoorn (NL); Boersen, Ruud, 7332 Apeldoorn (NL); Gelderloos, Paul, 7332 Apeldoorn (NL); Woudstra, Jelmer, 7332 Apeldoorn (NL)
(74) Representative: Dennemeyer & Associates S.A.

(57) **Abstract**

The invention relates to a method for controlling a fluid outlet temperature of a fluid flowing out of a heat exchanger, the method comprising the following steps:
providing a fluid system flow rate, a target fluid outlet temperature and a fluid outlet temperature,
determining a temperature difference between the target fluid outlet temperature and the fluid outlet temperature,
determining a first control signal by a first control unit wherein the first control signal depends on the determined temperature difference,
determining a second control signal by a second control unit wherein the second control signal depends on a delay factor that is dependent on the fluid system flow rate and
controlling a heater for heating the fluid in the heat exchanger on the basis of a heater control signal that depends on the first control signal and the second control signal.

## Description

The invention relates to a method for controlling a fluid outlet temperature of a fluid flowing out of a heat exchanger. Additionally, the invention relates to a controller, a heat source system comprising the controller and a heating system with such a heat source system. In addition, the invention relates to a use of the controller and a computer program product.

A plurality of different heat source systems is known that comprise a heat exchanger and a heater for heating a fluid that flows through the heat exchanger. The heated fluid is used for heat transfer in for example a heat pump. In particular, a heat pump fluid is heated by the fluid that flows out of the heat exchanger. After heating the heat pump fluid, the fluid is returned to the heat exchanger in which it is again heated. Thus, the fluid recirculates in a circuit of the heat source system. The heat pump can be a gas adsorption heat pump or a gas absorption heat pump.

WO2013080930A1 is directed to semiconductor exposure devices and ultraprecision machining devices with the requirement for accuracy of the temperature stability of the devices is required to be within the range of ±0.001°C and providing a temperature control system capable of improving control responsiveness, which is inhibited by heater responsiveness, so as to realize high temperature stability and discloses a control system for a fluid supplied by a pump and made to pass through a tank, wherein at the time of passage, the fluid convectively flows inside the tank and therefore, an action like agitation occurs. The control system includes a first thermometer provided at the uppermost stream; the tank provided at downstream of the first thermometer; a heater provided at downstream of the tank, for heating a fluid; a second thermometer provided at downstream of the heater; a feed forward control portion for calculating a heating amount of the heater based on a temperature detected by the first thermometer; and a feedback control portion for calculating the heating amount of the heater based on a temperature detected by the second thermometer. The tank has a function of smoothing a temperature fluctuation in a short cycle, whereas the feedback control based on the second thermometer has a function of controlling the heating amount of the heater so that a slow temperature fluctuation is stabilized. Further, the feed forward control portion calculates the heating amount of the heater based on the temperature detected by the first thermometer provided upstream of the tank. The conventional feed forward control, in which the temperature is detected immediately before the heater to calculate the heating amount of the heater, has a problem in that a response delay of the heater inhibits the achievement of high responsiveness. On the other hand, WO2013080930A1 discloses a configuration capable of improving the problem. Specifically, by using the generation of a time delay for the effects of the temperature of the fluid flowing into the tank to appear immediately before the heater after the fluid passes through the tank, the temperature of a heater portion can be predicted earlier than at real time. Therefore, the heating amount of the heater can be changed before the fluid reaches the heater portion. In this manner, the response delay of the heater can be compensated.

GB2269466B is directed to improvements in or relating to instantaneous water heaters, in particular for ablutionary appliances, especially showers, consisting of a heat exchanger with electric heating elements and control valves to regulate the water flowing through the heat exchanger. GB2269466B discloses a flow control valve, a heat exchanger and an electronic control unit mounted on a back plate for securing to a wall or like installation surface. An inlet coupling for connection to the water supply, for example mains cold water, and an outlet coupling for connection to an ablutionary appliance, for example a shower head, are provided. The inlet coupling is arranged for bottom entry of the main supply but the coupling can be rotated through 90° for rear entry of the mains supply. The electronic control unit is powered by a dc low voltage supply from a 12v transformer connected to a terminal block for the incoming mains electricity supply and is the response to user actuation of a control panel mounted on a front cover of the casing to operate the flow control valve and heat exchanger for delivery of water having a selected temperature to the ablutionary appliance. The electrical circuits of the electronic control unit are contained in a printed circuit board and include a main control circuit having a central control processor connected to a solenoid coil of the flow control valve and to respective switch relays for each of three separate heating elements of the heat exchanger. The central control processor is arranged to receive signals from a water inlet temperature sensor and a flow sensor positioned between the flow control valve and the inlet to the heat exchanger, and from a water outlet temperature sensor positioned at the outlet from the heat exchanger.

There exists the need that the fluid leaves the heat exchanger at a target fluid outlet temperature. This target fluid outlet temperature can be for example 180 degree Celsius. Dependent on the application, the target fluid outlet temperature can have a higher or lower value than 180 degree Celsius. However, the temperature and the flow of the fluid that is returned to the heat exchanger after heating the heating pump fluid can vary during the operation. In particular, the temperature of the returned fluid flow can fluctuate up to 100 degree Celsius . The absolute temperature of the returned fluid flow can range for example from 5 to 200 degree Celsius or can be higher than 200 degree Celsius. Such variation of temperature and the dynamic behaviour of returned fluid flow rate discussed below more in detail make it difficult to ensure that the temperature of the fluid flowing out the heat exchanger has the target temperature.

The provision of a stable fluid outlet temperature during the operation is also complicated by the way the heat exchanger works. A fluid outlet temperature is considered stable if the temperature is equal to the target fluid outlet temperature within a tolerance range of ± 3%. In the heat exchanger two different situations can occur. In a first situation, the temperature of the returned fluid is below the temperature of the fluid that is arranged in the bottom of the heat exchanger. In said situation, the entering fluid tends to remain in the lower part of the heat exchanger due to density differences. The fluid flow created by a pump is forcing the colder fluid to rise in the heat exchanger. This behaviour is known as "delay time behaviour".

In a second situation, the temperature of the return fluid is above the temperature of the fluid that is arranged at the bottom of the heat exchanger. In said situation, the returning fluid tends to rise in the heat exchanger due to density differences and the warmer fluid will transfer its thermal energy to the cooler water in the heat exchanger. This behavior is known as "mixed vessel behavior". The different behaviors in the heat exchanger described above are also flow dependent.

It is known to use a controller for controlling the heater providing heat to the fluid in the heat exchanger in order to secure that the fluid outlet temperature of the fluid flowing out the heat exchanger corresponds to the target temperature. However, due to the aforementioned fluctuations of the fluid inlet temperature and fluid flow, it is very difficult to maintain a stable fluid outlet temperature based on the aforementioned fluctuations of the fluid inlet temperature and fluid flow rate.

The object of the present invention is to provide a method for controlling the fluid outlet temperature of the fluid that flows out of the heat exchanger so that the fluid outlet temperature is stable independent of the flow fluctuations and the fluid temperature fluctuations of the returned fluid during the operation of the heat exchanger.

The object is solved by a method for controlling a fluid outlet temperature of a fluid flowing out of a heat exchanger, the method comprising the following steps:
providing a fluid system flow rate, a target fluid outlet temperature and a fluid outlet temperature,
determining a temperature difference between the target fluid outlet temperature and the fluid outlet temperature,
determining a first control signal by a first control unit wherein the first control signal depends on the determined temperature difference,
determining a second control signal by a second control unit wherein the second control signal depends on a delay factor that is dependent on the fluid system flow rate and
controlling a heater for heating the fluid in the heat exchanger on the basis of a heater control signal that depends on the first control signal and the second control signal.

A further object of the present invention is to provide a controller for controlling a fluid outlet temperature of a fluid that flows out of a heat exchanger so that the fluid outlet temperature is stable independent of the flow fluctuations and the fluid temperature fluctuations of the returned fluid during the operation of the heat exchanger.

The object is solved by a controller for controlling a fluid outlet temperature of a fluid flowing out of a heat exchanger, the controller comprising:
a first control unit that is configured to determine a first control signal that depends on a temperature difference between a target fluid outlet temperature and a fluid outlet temperature,
a second control unit that is configured to determine a second control signal that depends on a delay factor that is dependent on a fluid system flow rate wherein the controller is configured to control a heater for heating the fluid in the heat exchanger on the basis of a heater control signal that depends on the first control signal and the second control signal.

The inventive controller has the advantage that it is possible to provide a stable fluid outlet temperature of the fluid flowing out of the heat exchanger under very dynamic conditions with respect to temperature and flow of the fluid returning to the heat exchanger. Thus, it is possible to ensure that the fluid outlet temperature corresponds to a target fluid outlet temperature. This results in a better performance of a heat pump to which the fluid flowing out the heat exchanger can be supplied.

It was recognized that the usage of the controller which controls the heater, in particular the fluid outlet temperature, based on an error signal comprising an information about the temperature difference between the target fluid outlet temperature and the fluid outlet temperature of the fluid flowing out of the heat exchanger is not sufficient. In particular, it has been recognized that a more stable outlet temperature of the fluid that flows out the heat exchanger can be achieved if a delay factor dependent on the fluid system flow rate is considered in the control.

It was recognized that the flow dependent time delay secures that the fluid outlet temperature remains essentially stable. The fluid outlet temperature is considered stable if the temperature is equal to the target fluid outlet temperature within a tolerance range of ± 3%. In particular, it has been recognized that it is not possible to increase the heater power instantaneously when the fluid inlet temperature of the fluid entering the heat exchanger decreases rapidly. This is not possible because the fluid temperature of the fluid that is arranged in the heat exchanger has a higher temperature, in particular a temperature in the range of the target fluid temperature, so that an instantaneous increase of the heater power causes that the fluid outlet temperature of the fluid flowing out of the heat exchanger will increase above the target fluid temperature. However, sometime later the heater power has to be increased as the fluid inlet temperature of the fluid which recently has flown into the heat exchanger has a low temperature resulting in that the fluid outlet temperature drops below the fluid target temperature. This problem can be avoided by making the second control signal dependent on the delay factor. At the end a heat source system having an accurate and reproducible fluid outlet temperature is achieved wherein the heat source system allows for an optimal system performance.

According to the invention the "delay factor" considers the technical aspect that the fluid needs a time for passing a point where the fluid inlet temperature is measured and/or is calculated and/or is simulated to reach the heater. If e.g. a temperature change is measured at the inlet of the heat exchanger and the heater power would be increased accordingly at that same moment as if the inlet water would already be at a heating area, there would be an overshoot/undershoot, as the colder/warmer water has not yet reached the heating area. The heating area is the area where the heat is transferred from the heater to the fluid.

The delay factor ensures that the delay time to the required change in heater power is increasing or decreasing. Additionally, the delay factor can be continuously adjusted during the operation of the controller in order to cope with the dynamic input conditions. The delay factor is dependent on the fluid system flow rate. The delay factor values can be predetermined and/or stored in an electric or electronic memory.

The fluid system flow rate is defined by a fluid volume per unit time or a fluid mass per unit time. It corresponds to the fluid flow that enters the heat exchanger and/or to the fluid flow in a heat source system that is described later more in detail. The fluid system flow rate can be measured by a sensor and/or can be calculated and/or simulated. The fluid inlet temperature is the temperature of the fluid that enters the heat exchanger.

According to the invention the fluid system flow rate can be provided in different ways. It is possible that the fluid system flow rate is acquired, in particular from e.g. a sensor, and/or calculated and/or simulated.

The controller can be a printed circuit board comprising among others the first control unit and the second control unit that are electrically or electrical connected with each other. The printed circuit board can have a substrate mechanically supporting the first control unit and the second control unit. The first control unit can be or comprise a processor and/or the second control unit can be or comprise a processor. Both control units can be part of the same processor. Alternatively, the control units are or are part of separate processors.

The fluid can be water. Alternatively, the fluid can be another liquid or gas. In particular, the fluid can be a water and ammonia mixture. Alternatively, the fluid can be a mixture of water and glycol. The present invention has the advantage that the control for controlling the fluid outlet temperature works independently from the fluid used in the heat exchanger.

The target fluid temperature can be 180 degree Celsius. Alternatively, the target fluid temperature can be in a range for example from between 2 degree Celsius to at least 200 degree Celsius. The temperature can in general be chosen depending on the fluid used and the requirements of the respective chosen heating system, such as the pressure that the system can handle. In other words, the controller according to the invention allows choosing any possible temperature. The water can be and can remain in the liquid phase during its circulation in the heat source system. This is possible by providing a high pressure in the circuit of the heat source system so that the water remains in the liquid phase. In particular the pressure can be 16 bar in the heat source system. Alternatively, the pressure can be higher or lower than 16 bar. However, the control of the fluid outlet temperature is independent of the pressure in the heat source system.

The heater can be a burner. The burner can be a gas burner combusting fuel gas. Additionally, the burner can be a pre-mixed gas burner in which a mixture comprising fuel gas and gas is combusted. The fuel gas can be a natural gas, methane, ethylene, propane, butane, coal gas, biogas etc., mixtures of the same, and mixtures of the same additionally comprising hydrogen, or hydrogen, in particular pure hydrogen. In particular, the fuel gas can comprise hydrogen in the range of 0 mol % to 100 mol%. Pure hydrogen is present if the fuel gas has a at least 99,5 mol% of hydrogen. The gas can be air.

The fluid outlet temperature is the temperature of the fluid flowing out of the heat exchanger. Said temperature can be measured by means of a temperature sensor. The target fluid outlet temperature is the temperature of the fluid flowing out of the heat exchanger that shall be achieved by the control process. This temperature can be preset by a user and/or can be dependent on the application of the heat source system.

According to an embodiment of the invention the controller can comprise a delay factor module for determining a delay factor. The delay factor module can be arranged and configured to determine the delay factor before the second control unit determines the second control signal. This has the advantage that calculation processes have not to be done at the same time.

The delay factor can decrease with increasing fluid system flow rate and/or the delay factor can increase with decreasing fluid system flow rate. This ensures in a simple way that the fluid system flow rate is considered in the control process. In particular, the dependency of the delay factor from the fluid system flow rate improves the control process so that the fluid outlet temperature corresponds to the target fluid temperature. The second control signal can be dependent on the fluid system flow rate. Additionally or alternatively the second control signal can be dependent on an input value that depends on the delay factor and the temperature difference between the target fluid outlet temperature of the fluid flowing out of the heat exchanger and the fluid inlet temperature of the fluid flowing into the heat exchanger. In particular, the second control signal can be dependent on a result of a multiplication of the fluid system flow rate, the delay factor and the temperature difference between the target fluid outlet temperature and the fluid inlet temperature. Additionally, a specific heat capacity of the fluid can be multiplicated with the aforementioned multiplication result so that the second control signal depends on the specific heat capacity.

The second control unit can be a feed forward controller. A feed forward controller usually uses data from sensors to predict when an upset is about to occur. Feed forward controllers are proactive, taking action before changes to the process variable occur. The use of the feed forward controller has the advantage that the heating power can be adjusted before the target fluid outlet temperature significantly changes due to fluctuations in the fluid outlet temperature and/or the fluid system flow rate. At low system flow rates the effect of the feed forward controller is adapted to the system flow rate. The higher the system flow rates the faster the power up.

The first control signal can be dependent on the fluid system flow rate. That means, the fluid system flow rate can be used by both the first control unit for determining the first control signal and by the second control unit for determining the second control signal.

According to an embodiment of the invention the first control unit can be a PI-controller or a PID-controller. The PI controller can comprise a proportional gain factor and an integrative gain factor, wherein the proportional gain factor and the integrative gain factor depend on the fluid system flow rate, respectively. The PID controller can comprise a proportional gain factor, an integrative gain factor and a derivative gain factor, wherein the proportional gain factor, the integrative gain factor and the derivative gain factor depend on the fluid system flow rate, respectively.

The proportional gain factor can depend on the fluid system flow rate. In particular, the proportional gain factor can increase with increasing fluid system flow and the integrative gain factor can decrease with increasing fluid system flow rate. The first controller can be adapted such that the proportional and integral effect on the power output of the first controller is more aggressive with an increase of the fluid system flow rate than with a decreasing fluid system flow rate. With "more aggressive" is meant that the power output of the first controller reacts quicker and/or stronger to an increase of the fluid system flow rate than to a decrease of the fluid flow rate.

An error signal comprising information about the temperature difference between the target fluid outlet temperature and the fluid outlet temperature can be inputted to the first control unit. By considering the fluid system flow rate by the PI controller or PID controller the first control signal is very accurate resulting in the end that the fluid outlet temperature of the fluid flowing out of the heat exchanger corresponds to the target fluid outlet temperature.

The controller can comprise a first adjustment module for adjusting the first control signal with a first set factor. Additionally, the controller can comprise a second adjustment module for adjusting the second control signal with a second set factor. The adjustment can occur before the heater control signal is calculated. The first and second factors are used to fit the output of first control unit and the second control unit on the application of the heat source system.

The controller can comprise a calculation module which is configured to calculate the heater control signal based on the first control signal and the second control signal. In particular, the heater control signal can correspond to a sum of the first control signal and the second control signal.

The first control signal can comprise an information about a required heater power. The second control signal can correspond to a required heater power. The heater signal can comprise information about the total heater power that has to be provided by the heater in order to secure that the fluid outlet temperature corresponds to the fluid target temperature.

At the end the controller corrects in a sophisticated manner the error between the target fluid outlet temperature and the fluid outlet temperature by increasing or decreasing the heater power. As discussed above the feed forward controller has the advantage that it reacts proactive and, thus, it is responded appropriate to changes in the fluid system flow rate and/or the fluid inlet temperature.

According to an advantageous embodiment a heat source system for a heat pump is provided. The heat pump can be a gas heat pump. The heat pump can be a heat pump using sorption technology, such as a gas adsorption heat pump or a gas absorption heat pump. The heat source system comprises a heat exchanger, a heater for heating a fluid in the heat exchanger and an inventive controller controlling the fluid outlet temperature of the fluid flowing out the heat exchanger by controlling the heater. The heat source system comprises a circuit in which the fluid flows, a pump and the heat exchanger wherein the pump and the heat exchanger are fluidically connected with each other. The pump leads to that the fluid circulates in the circuit and flows through the heat exchanger. According to an embodiment the heater of the heat source system can be a gas boiler.

Additionally, a heating system with the aforementioned heat source system and a heat pump is provided. The fluid flowing out the heat exchanger transfers heat to the heat pump. The colder fluid is returned to the heat exchanger in which it is heated again by the heater.

According to an advantageous embodiment a computer program product is provided. The computer program comprises instructions which, when the program is executed by a controller cause the controller to perform the inventive method. Additionally, a data carrier is provided on which the computer program is stored or data carrier signal is provided which transmits the computer program.

In the figures, the subject-matter of the invention is schematically shown, wherein identical or similarly acting elements are usually provided with the same reference signs.
- Fig. 1: shows a schematic view of a heating source system with a controller according to an embodiment and
- Fig. 2: shows a schematic view of a heating system according to a first embodiment with a heating source system and a heat pump and
- Fig. 3: shows a schematic view of a heating system according to a second embodiment with a heating source system and a heat pump.

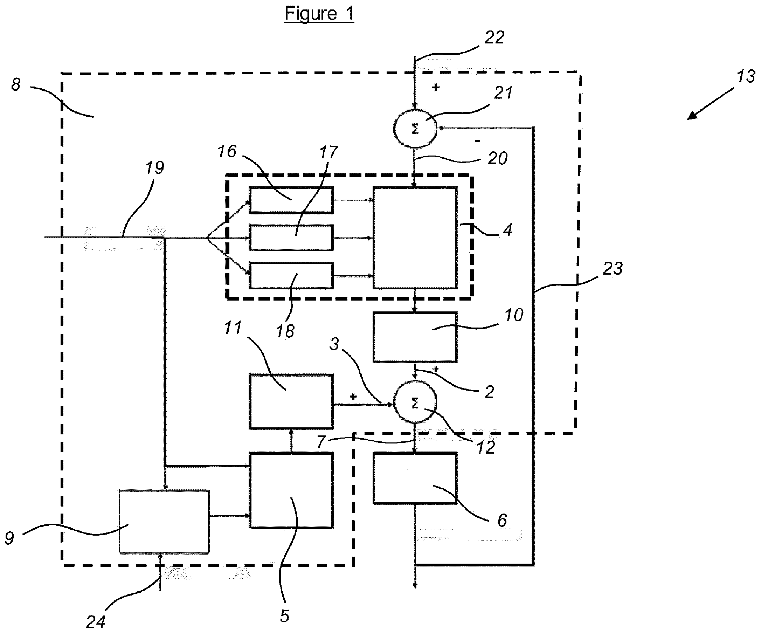

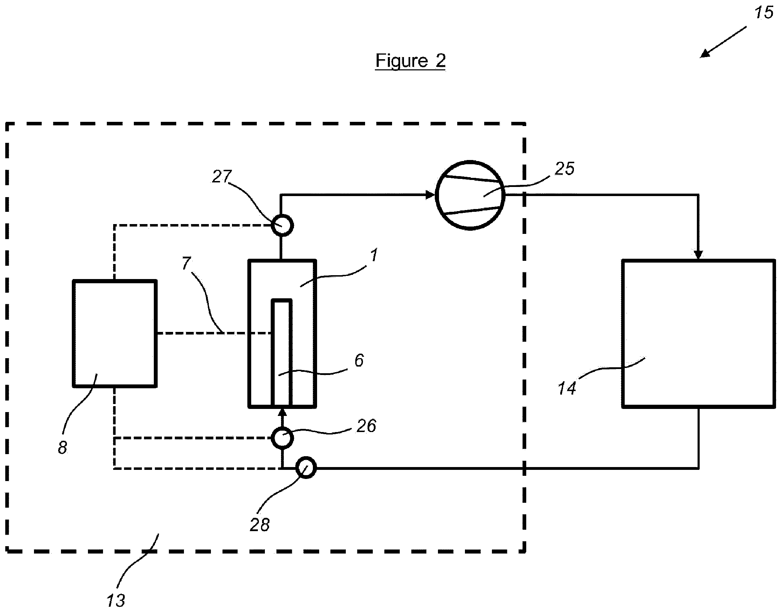

Fig. 1 shows a heat source system 13 comprising a controller 8 and a heater 6. The controller 8 controls the heater 6 on the basis of a heater control signal 7. In particular, the controller 8 transmits a heater control signal 7 to the heater 6. As it is shown in fig. 2 the heater 6 provides heat that is transferred via a heat exchanger 1 to a fluid arranged in the heat exchanger 1.

The controller 8 comprises a first control unit 4 that is configured to determine a first control signal 2 that depends on a temperature difference between a target fluid outlet temperature of a fluid flowing out of the heat exchanger 1 and a fluid outlet temperature of the fluid flowing out of the heat exchanger 1. Additionally, the controller 8 comprises a second control unit 5 that is configured to determine a second control signal 3 that depends on a delay factor that is dependent on a fluid system flow rate of the fluid flowing into the heat exchanger 1. Additionally, the second control signal 3 is dependent on a temperature difference between the target fluid outlet temperature of the fluid flowing out the heat exchanger 1 and the fluid inlet temperature of the fluid flowing into the heat exchanger 1. The controller 8 is configured to control the heater 6 for heating the fluid in the heat exchanger 1 on the basis of the heater control signal 7 that depends on the first control signal 2 and the second control signal 3.

The controller 8 comprises a calculation module 12 to which the first control signal 2 and the second control signal 7 are inputted. The first control signal 2 and the second control signal 3 comprise an information about the required heater power, respectively. The calculation module 12 sums the two required heater powers and outputs the heater control signal 7 comprising information about the required heater power.

The first control unit 4 is a PID-Controller and comprises a proportional gain module 16 for determining the proportional gain factor, an integrative gain module 17 for determining the integrative gain factor and a derivative gain module 18 for determining a derivative gain factor. A fluid flow signal 19 comprising information about the fluid system flow rate entered into the heat exchanger 1 is transmitted to the proportional gain module 16, the integrative gain module 17 and the derivative gain module 18, respectively. The proportional gain module 16 determines the proportional gain factor based on the inputted fluid system flow rate. The integrative gain module 17 determines the integrative gain factor based on the inputted fluid system flow rate and the derivative gain module 18 determines the derivative gain factor based on the inputted fluid system flow rate. The fluid flow signal 19 is also transmitted to the second control unit 5 and to a delay factor module 9 of the controller 8. In the embodiment the fluid system flow rate transmitted by the fluid flow signal 19 is measured in the heat source system 13. Alternatively, it is possible to calculate the fluid system flow rate in the controller 8.

The first control unit 4 receives as input an error signal 20. The error signal 20 is calculated in a further calculation module 21. A first temperature signal 22 comprising information about the target fluid outlet temperature and a second temperature signal 23 comprising information about the fluid outlet temperature of the fluid flowing out of the heat exchanger 1 are inputted into the calculation module. As is shown in fig. 2 the fluid outlet temperature is measured by a temperature sensor 27. The error signal 20 comprises an information about the difference between the target fluid temperature and the fluid outlet temperature.

The determined proportional gain factor, the determined integrative gain factor and the derivative gain factor are used to determine the first control signal 2 on the basis of the error signal 20.

As mentioned before the controller 8 comprises a delay factor module 9. The delay factor module 9 receives the fluid flow signal 19. Additionally, the delay factor module 9 receives a third temperature signal 24. The third temperature signal 24 comprises information about the temperature difference between the target fluid outlet temperature and the fluid inlet temperature of the fluid flowing into the heat exchanger . The temperature difference can be determined by the controller 8 or outside the controller 8. The delay factor module 9 determines the delay factor dependent on the fluid system flow rate transmitted by the fluid flow signal 19. The delay factor module 9 transmits an input value to the second control unit 5. The input value depends on the determined delay factor and the temperature difference.

In the second control unit 5 the required heater power is determined by multiplication of the fluid system flow rate, the delay factor, the temperature difference and a specific heat capacity.. The required heater power is transmitted by means of the second control signal 3 to the calculation module 12.

The controller 8 comprises a first adjustment module 10 and a second adjustment module 11. The first adjustment module 10 is arranged such that the first control signal 2 is adjusted by a first set factor of the first adjustment module 10 before it is inputted into the calculation module 12. The second adjustment module 11 is arranged such that the second control signal 3 is adjusted by a second set factor of the second adjustment module 11 before it is inputted into the calculation module 12. The first set factor and the second set factor are predetermined and adapted to the application of the heat source system 13.

Fig. 2 shows a schematic view of a heating system 15 with a heat source system 13 and a heat pump 14. The heat source system 13 comprises a pump 25, the heat exchanger 1, the heater 6 and the controller 8. The heating system 15 also comprises further components, in particular, a gas-air unit. The component can be a gas valve, a venturi, a ventilator and/or a non-return valve, that are not shown in the figures. At least one of said components can be controlled by the controller 8. The pump 25 and the heat exchanger 1 are fluidically connected to each other. The heater 6 is arranged within the heat exchanger 1.

The fluid circulates by means of pump 25 such that fluid flowing out of the heat exchanger 1 is supplied to the heat pump 14. A heat transfer occurs in the heat pump 14 between the fluid and a heat pump fluid resulting to that the fluid temperature decreases. After the heat pump 14, the fluid enters the heat exchanger 1 and is heated by the heater 6.

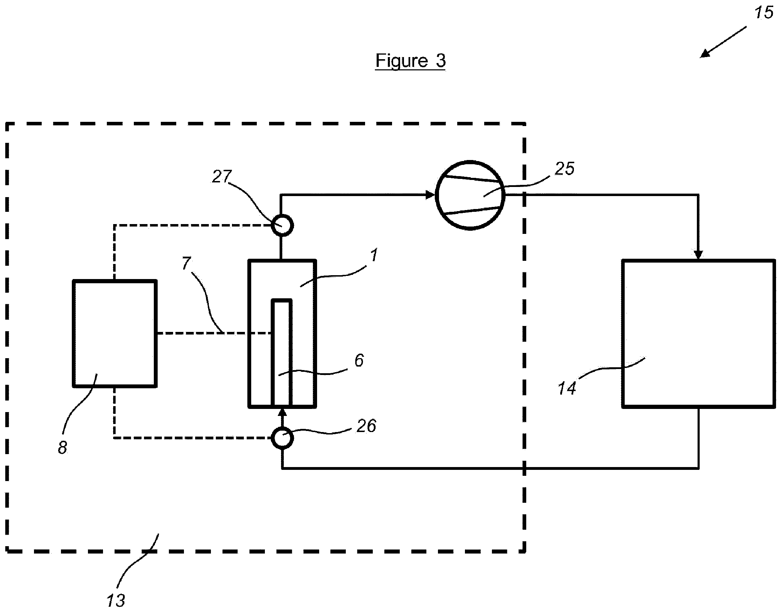

The heat source system 13 comprises two temperature sensors 26, 27 and a flow sensor 28. The flow sensor 28 measures the fluid system flow rate in the heat source system 13. Alternatively, the fluid system flow rate can be simulated and/or calculated, in which case, the flow sensor 28 does not have to be present in the heat source system 13. Such an embodiment is shown in figure 3.

In both embodiments shown in figures 2 and 3, the first temperature sensor 26 measures the fluid inlet temperature of the fluid entering the heat exchanger 1. The second temperature sensor 27 measures the fluid outlet temperature of the fluid that flows out of the heating exchanger 1. The temperature sensor can be a NTC sensor.

The measured values are transferred to the controller 8 as is shown by the dotted lines. The controller 8 processes the information in the aforementioned way and transmits the heater control signal 7 to the heater 6 in order to control the heater 6 such that the fluid outlet temperature of the fluid flown out the heat exchanger 1 corresponds to the target fluid outlet temperature.

### Reference Signs

- 1: heat exchanger
- 2: first control signal
- 3: second control signal
- 4: first control unit
- 5: second control unit
- 6: heater
- 7: heater control signal
- 8: controller
- 9: delay factor module
- 10: first adjustment module
- 11: second adjustment module
- 12: calculation module
- 13: heat source system
- 14: heat pump
- 15: heating system
- 16: proportional gain module
- 17: integrative gain module
- 18: derivative gain module
- 19: fluid flow signal
- 20: error signal
- 21: further calculation module
- 22: first temperature signal
- 23: second temperature signal
- 24: third temperature signal
- 25: pump
- 26: first temperature sensor
- 27: second temperature sensor
- 28: flow sensor

## Claims

1. Method for controlling a fluid outlet temperature of a fluid flowing out of a heat exchanger (1), the method comprising the following steps:
providing a fluid system flow rate, a target fluid outlet temperature and a fluid outlet temperature,
determining a temperature difference between the target fluid outlet temperature and the fluid outlet temperature,
determining a first control signal (2) by a first control unit (4) wherein the first control signal (2) depends on the determined temperature difference,
determining a second control signal (3) by a second control unit (5) wherein the second control signal (3) depends on a delay factor that is dependent on the fluid system flow rate and
controlling a heater (6) for heating the fluid in the heat exchanger (1) on the basis of a heater control signal (7) that depends on the first control signal (2) and the second control signal (3).

2. Method according to claim 1, **characterized in that**
a. the delay factor is decreasing with increasing fluid system flow rate and/or **in that**
b. the delay factor is increasing with decreasing fluid system flow rate and/or **in that**
c. the delay factor is determined before the second control signal (3) is determined.

3. Method according to claim 1 or 2, **characterized in that**
a. the second control signal (3) is dependent on the fluid system flow rate and/or the temperature difference between the target fluid outlet temperature and the fluid inlet temperature or **in that**
b. the second control signal (3) is dependent on a result of a multiplication of the fluid system flow rate into the heat exchanger (1) and the temperature difference between the target fluid inlet temperature and the fluid outlet temperature.

4. Method according to one of the claims 1 to 3, **characterized in that** an input value depending on the temperature difference between the target fluid
outlet temperature and the fluid inlet temperature and the delay factor is inputted to the second control unit (5)

5. Method according to one of the claims 1 to 4, **characterized in that** the first control signal (2) is dependent on the fluid system flow rate.

6. Method according to claim 5, **characterized in that**
a. the first control unit (4) is a PI controller comprising a proportional gain factor and an integrative gain factor, wherein the proportional gain factor and the integrative gain factor depend on the fluid system flow rate, respectively or
b. the first control unit (4) is a PID controller comprising a proportional gain factor, an integrative gain factor and a derivative gain factor, wherein the proportional gain factor, the integrative gain factor and the derivative gain factor depend on the fluid system flow rate, respectively.

7. Method according to claim 6, **characterized in that**
a. the proportional gain factor is increasing with increasing fluid system flow rate and the integrative gain factor is decreasing with increasing fluid system flow rate and/or **in that**
b. the first controller is adapted such that the proportional and integral effect on the power output of the first controller is more aggressive with an increase of the fluid system flow rate than with a decreasing fluid system flow rate and/or **in that**
c. an error signal (20) comprising information about the temperature difference is inputted to the first control unit (4).

8. Method according to one of the claims 1 to 7, **characterized in that**
a. the first control signal (2) comprises an information about a required heater power and/or **in that**
b. the second control signal (3) comprises an information about a required heater power and/or **in that**
c. the heater control signal (7) corresponds to a sum of the first control signal (2) and the second control signal (3).

9. Method according to one of the claims 1 to 8, **characterized in that** the first control signal (2) is adjusted by a first set factor and/the second control signal (3) is adjusted by a second set factor.

10. Controller (8), in particular for executing a method according to one of the claims 1 to 9, for controlling a fluid outlet temperature of a fluid flowing out of a heat exchanger (1), the controller (8) comprising:
a first control unit (4) that is configured to determine a first control signal (2) that depends on a temperature difference between a target fluid outlet temperature and a fluid outlet temperature,
a second control unit (5) that is configured to determine a second control signal (3) that depends on a delay factor that is dependent on a fluid system flow rate wherein the controller (8) is configured to control a heater (6) for heating the fluid in the heat exchanger (1) on the basis of a heater control signal (7) that depends on the first control signal (2) and the second control signal (3).

11. Controller (8) according to claim 10, **characterized in that**
a. the first control unit (4) is a PI-controller or a PID-controller and/or **in that**
b the second control unit (5) is a feed forward controller and/or **in that**
c. the controller (8) comprises a delay factor module (9) for determining a delay factor or the controller (8) comprises a delay factor module (9) for determining a delay factor wherein the delay factor module (9) is arranged and configured to determine the delay factor before the second control unit (5) determines or outputs the second control signal (3) and/or **in that**
d. the controller (8) comprises a first adjustment module (10) for adjusting the first control signal (2) with a first set factor and/or **in that**
e. the controller (8) comprises a second adjustment module (11) for adjusting the second control signal (3) with a second set factor and/or **in that**
f. the controller (8) comprises a calculation module (12) which is configured to calculate the heater control signal (7) based on the first control signal (2) and the second control signal (3).

12. Heat source system (13) for a heat pump (14), the heat source system (13) comprising a heat exchanger (1), a heater (6) for heating a fluid in the heat exchanger (1) and a controller (8) according claim 10 or 11 for controlling the heater (6).

13. Heating system (15) with a heat source system (13) according to claim 12 and a heat pump (14).

14. Use of a controller according to claim 10 or 11 in a heat source system according to claim 12 or a heating system according to claim 13.

15. Computer program product comprising instructions which, when the program is executed by a controller, in particular a controller (8) according to claim 10 or 11, cause the controller to perform the method according to any one of claims 1 to 9.
